# EUROPÄISCHE PATENTSCHRIFT

(11) **EP 2 298 064 B1**
(45) Veröffentlichungstag und Bekanntmachung des Hinweises auf die Patenterteilung: **24.07.2013**
(21) Anmeldenummer: 10008212.2
(22) Anmeldetag: 06.08.2010
(51) Int. Cl.: A01F 29/06, A01F 29/09

(54) **Häckselaggregat**
Shredder device
Agrégat de hachage

(30) Priorität: 18.09.2009 DE 102009041829
(43) Veröffentlichungstag der Anmeldung: 23.03.2011
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- EP-A1- 0 022 053
- DE-A1- 19 651 694
- DE-U1- 8 700 403

## Beschreibung

Die Erfindung betrifft eine Gegenschneide für ein Häckselaggregat eines Feldhäckslers gemäß dem Oberbegriff des unabhängigen Anspruchs 1.

### Stand der Technik

Bekannt sind Gegenschnelden für Häckselaggregate von Feldhäckslern, die als Prisma und mit wenigstens einer Schneidkante ausgebildet ist, die mit den umlaufend angetriebenen Häckselmessern einer Häckseltrommel zusammenwirkend das Schneidwerkzeug bildet. Dabei ist die besagte Kante den umlaufenden Häckselmessem zugewandt. In einer weiteren Ausgestaltung sind diese prismatisch ausgebildeten Gegenschneiden als Wendegegenschneiden ausgebildet, so dass, wenn die eine Seite der Gegenschneide so weit verschlissen ist, dass selbst ein Nachschleifen der Häckselmesser nicht mehr den gewünschten Effekt aufweist, die Gegenschneide gewendet wird und somit die andere Seite der Gegenschneide zum Einsatz kommt.

Aus DE-U-87 00 403 ist eine Gegenschneide für Feldhäcksier zur Ernte verschiedenen Ernteguts bekannt, an der die umlaufenden Messer eines Häckselaggregates vorbei streichen und die eine mit den umlaufenden Messern zum Häckselschnitt zusammenwirkende Schnittkante bildet, wobei die Gegenschneide wenigstens zwei Schnittkanten aufweist, die den umlaufenden Messern im Wechsel zugeordnet werden können und wobei die Schnittkanten einen in Querschnittsform und Material jeweils unterschiedlichen Verschleißschutz aufweisen.

In der Praxis kommt es nun immer wieder vor, dass gerade beim Häckseln von Mais die Lischenblätter nicht vollständig der gewünschten Häckselqualltät entsprechend zerkleinert werden, weil sie gerade bei nicht mehr so ganz scharfer Schneidkante der Gegenschneide von den umlaufenden Häckselmessern unzerkleinert durch den Schneidspalt zwischen Gegenschneide und Häckselmesser hindurchgerissen werden, so dass das Häckselgut als Ganzes einen nicht zufriedenstellenden Eindruck hinterlässt.

### Aufgabenstellung

Hier setzt die Aufgabe der Erfindung an mit dem Ziel, durch eine weiterentwickelte Ausgestaltung der Gegenschnelde eine Verbesserung der Häckselqualität des Häckselgutes zu erreichen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Dadurch, dass die Gegenschneide wenigstens zwei übereinander liegende Schneidkanten aufweist, die dafür vorgesehen sind, dass diese den umlaufend angetriebenen Häckselmessern zugewandt sind, und mit diesen funktional und schneidend in Eingriff stehen, werden die hindurch gerissenen Lischenblätter ein zweites mal von den Schneidkanten erfasst. In vorteilhafter Weise ist auch diese Gegenschneide als Umschlag-Wendegegenschneide ausgebildet, so dass auch dadurch die Standzeit der Gegenschneide verdoppelt werden kann.

Um die schnelle Austauschbarkeit der Gegenschneide herbeiführen zu können, ist die Unterseite der Gegenschneide mit wenigstens zwei Gewindesacklöchern zur Befestigung der Gegenschneide auf einer Auflage ausgebildet.

### Ausführungsbeispiel

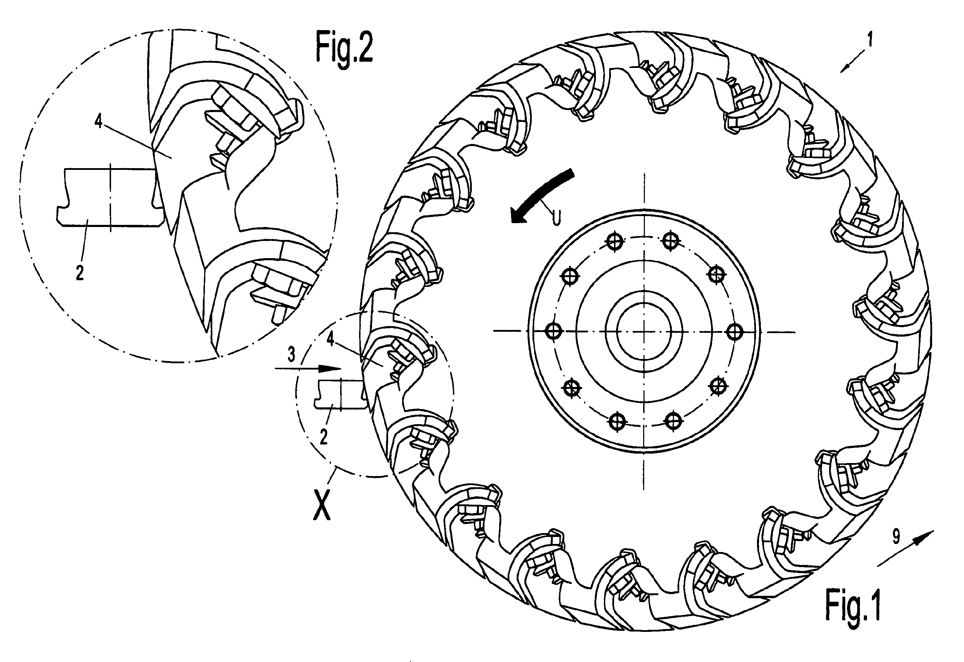

In den Figurendarstellungen Fig.1 und Fig.2 ist eine Häckseltrommel 1 eines Häckselaggregats für einen Feldhäcksler in einer Seitenansicht dargestellt. Diese Darstellung ist für die Beschreibung der Erfindung hinreichend, da dem Fachmann die Funktion, der Antrieb und Umgebung der Häckseltrommel innerhalb eines Häckselaggregats hinreichend bekannt ist. Der Häckseltrommel 1 vorgelagert ist die am Häckslergehäuse auf einer nicht dargestellten Unterlage abgestützte Gegenschneide 2. Die Umlaufrichtung U der angetriebenen Häckseltrommel 1 ist durch einen Rotationspfeil dargestellt. Der eintretende Gutstrom 3 stützt sich auf dem Widerlager ausgebildet als Gegenschneide 2 ab. Somit bilden die Häckselmesser 4 und die Gegenschneiden 2 gemeinsam ein Schnittwerkzeug zum Häckseln von Erntegut, beispielsweise zum Zerkleinern von Maispflanzen, wobei das gehäckselte Erntegut die Häckseltrommel 1 in Ausblasrichtung 9 wieder verlässt. Fig.2 zeigt die vergrößerte Darstellung der Einzelheit X aus Fig.1.

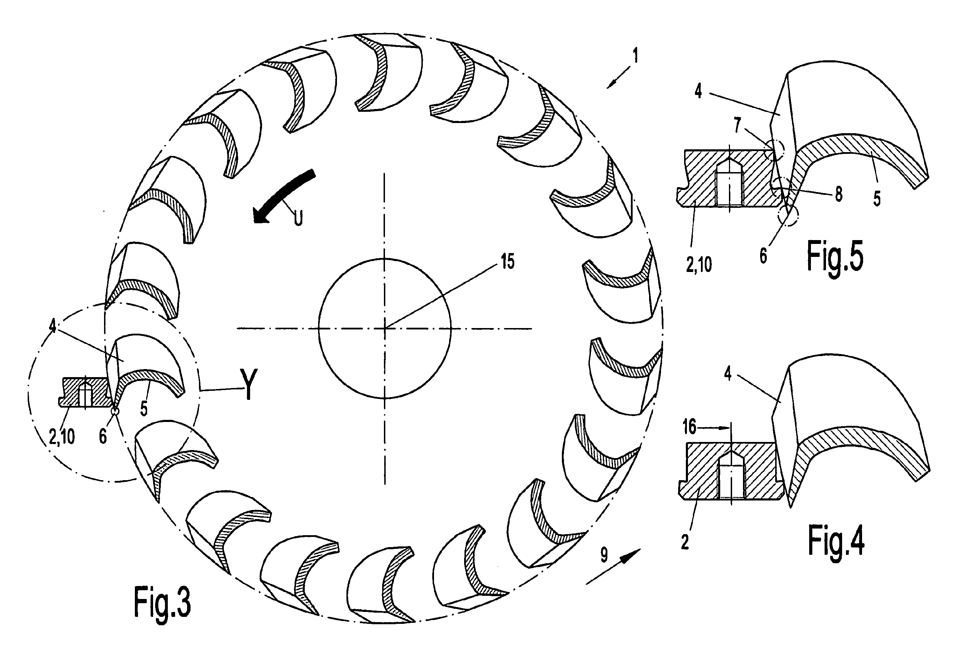

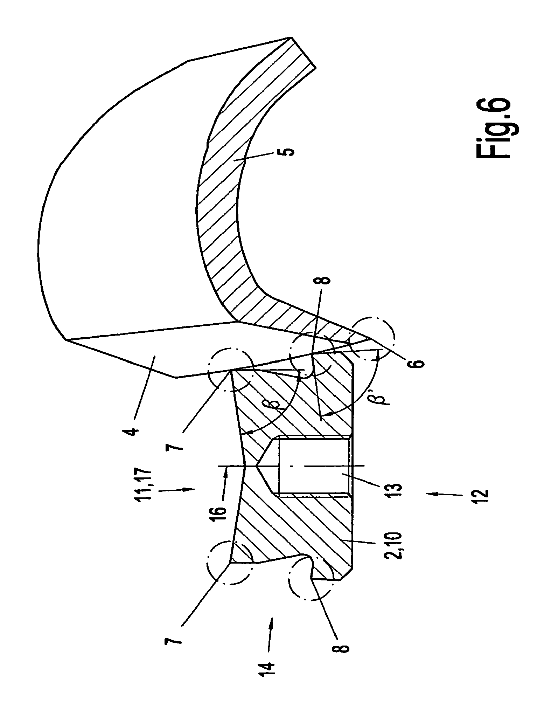

Fig.3 zeigt einen Schnitt durch die in Fig.1 dargestellte Häckseltrommel, dessen Schnittebene parallel zur Draufsicht der Seitenansicht gemäß Fig.1 verläuft. Fig.4 zeigt den Ausschnitt Y der Fig.3 in vergrößerter Darstellung. In dem Ausführungsbeispiel Fig.3 bzw. Fig.4 sind die Häckselmesser 4 als gewölbte Schalenmesser mit dem Häckselmesserquerschnitt 5 ausgebildet, welche mit der Umlaufrichtung U um die Rotationsachse 15 angetrieben werden und dessen Häckselmesserschneide 6 schräg zur Rotationsachse 15 verläuft. Die Gegenschneide 2 ist als Prisma 10 ausgebildet, dessen Querschnitt ebenfalls im Schnitt dargestellt ist. Das Prisma 10 weist beidseitig der Symmetrieachse 16 je zwei Schneidkanten 7 und 8 auf. Bedingt durch den schrägen Verlauf der Häckselmesserschneide 6 zur Rotationsachse 15 findet während der Umlaufbewegung der Häckselmesser zwischen der Häckselmesserschneide 6 und den beiden der Häckseltrommel 1 zugewandten Schneidkanten 7,8 des Prismas 10 bzw. der Gegenschneide 2 gleichzeitig ein Schnittvorgang statt. Fig.5 und Fig.6 zeigen gegenüber der Fig.4 alternative Querschnitte eines Prismas 10 bzw. einer Gegenschneide 2 auf. Fig.6 zeigt an der Oberseite 11 des Prismas 10 bzw. der Gegenschneide 2 zusätzlich eine muldenförmige Vertiefung 17 auf, so dass beide Schneidkanten 7,8, die erste Schneidkante 7 und die zweite Schneidkante 8, einen Keilwinkel β,β' < 90° aufweisen. Die Unterseite 12 des Prismas 10 bzw. der Gegenschneide 2 weist wenigstens zwei Gewindebohrungen 13 auf, dessen Mittellinie zugleich die Symmetrieachse 16 für die Umschlaggegenschneide 14 darstellt.

### Bezugszeichenliste

- 1: Häckseltrommel
- 2: Gegenschneide
- 3: Gutstrom
- 4: Häckselmesser
- 5: Häckselmesserquerschnitt
- 6: Häckselmesserschneide
- 7: erste Schneidkante
- 8: zweite Schneidkante
- 9: Ausblasrichtung
- 10: Prisma
- 11: Oberseite, Auflageseite
- 12: Unterseite
- 13: Gewindebohrung
- 14: Umschlaggegenschneiden
- 15: Rotationsachse
- 16: Symmetrieachse
- 17: muldenförmige Vertiefung
- U: Umlaufrichtung U
- β, β': Keilwinkel

## Patentansprüche

1. Häckselaggregat eines Feldhäckslers mit einer als Prisma (10) ausgebildeten Gegenschneide (2) mit wenigstens einer ersten Schneidkante (7) wobei die wenigstens eine Schneidkante (7) dafür vorgesehen ist, dass sie den umlaufend angetriebenen Häckselmessern (4) einer Häckseltrommel (1) des Häckselaggregates zugewandt ist und die Gegenschneide (2) beidseitig zu ihrer Symmetrieachse (16) zwei übereinander liegende Schneidkanten (7, 8) aufweist, **dadurch gekennzeichnet, dass** die beiden der Häckseltrommel (1) zugewandten Schneidkanten (7, 8) mit den umlaufend angetriebenen Häckselmessern (4) in Eingriff stehen, so dass an beiden Schneidkanten (7, 8) glelchzeitig ein Schnittvorgang stattfindet, wobei die Oberseite (11) der Gegenschneide (2) als Auflageseite (11) des Gutstroms (3) eine muldenförmige Vertiefung (17) aufweist und die Keilwinkel (β, β') der Gegenschneide (2) < 90° sind.

2. Häckselaggregat nach Anspruch 1, **dadurch gekennzeichnet, dass** die Gegenschneide (2) mit Umschlaggegenschneiden (14) ausgebildet ist.

3. Häckselaggregat nach Anspruch 1, **dadurch gekennzeichnet, dass** die Unterseite (12) der Gegenschneide (2) wenigstens zwei Gewindebohrungen (13) zur Befestigung der Gegenschneide (2) auf einer Auflage aufweist.

## Claims

1. A chopping device of a forage harvester comprising a counterpart cutting member (2) which is in the form of a prism (10), with at least one first cutting edge (7), wherein the at least one cutting edge (7) is so provided that it faces towards the chopping blades (7), which are driven in rotation, of a chopping drum (1) of the chopping device, and the counterpart cutting member (2) has on both sides in relation to its axis of symmetry (16) two mutually superposed cutting edges (7, 8), **characterised in that** the two cutting edges (7, 8) that are towards the chopping drum (1) are in engagement with the chopping blades (4) which are driven in rotation so that a cutting operation occurs at the same time at both cutting edges (7, 8), wherein the top side (11) of the counterpart cutting member (2) has a trough-shaped recess (7) as a support side (11) for the material flow (3) and the wedge angles (β, β') of the counterpart cutting member (2) are < 90°.

2. A chopping device according to claim 1 **characterised in that** the counterpart cutting member (2) is formed with reversible counterpart cutting members (14).

3. A chopping device according to claim 1 **characterised in that** the underside (12) of the counterpart cutting member (2) has at least two threaded bores (13) for fixing the counterpart cutting member (2) on a support.

## Revendications

1. Organe de hachage d'une ensileuse, comportant un contre-couteau (2) réalisé sous la forme d'un prisme (10) avec au moins une première arête de coupe (7), ladite au moins une arête de coupe (7) étant prévue de façon à être tournée vers les couteaux de hachage (4), entraînés en rotation, d'un tambour de hachage (1) de l'organe de hachage, et le contre-couteau (2) présentant, des deux côtés par rapport à son axe de symétrie (16), deux arêtes de coupe (7, 8) disposées l'une au-dessus de l'autre, **caractérisé en ce que** les deux arêtes de coupe (7, 8) tournées vers le tambour de hachage (1) sont en prise avec les couteaux de hachage (4) entraînés en rotation, de sorte qu'une opération de coupe a lieu en même temps sur les deux arêtes de coupe (7, 8), la face supérieure (11) du contre-couteau (2) conçue comme face d'appui (11) du flux de produit (3) présentant un évidement (17) en forme de cuvette, et les angles de coin (β, β') du contre-couteau (2) étant < 90°.

2. Organe de hachage selon la revendication 1, **caractérisé en ce que** le contre-couteau (2) est réalisé avec des contre-couteaux réversibles (14).

3. Organe de hachage selon la revendication 1, **caractérisé en ce que** la face inférieure (12) du contre-couteau (2) présente au moins deux trous filetés (13) pour la fixation du contre-couteau (2) sur un support.
